# EUROPEAN PATENT SPECIFICATION

(11) **EP 1 892 128 B1**
(45) Date of publication and mention of the grant of the patent: **30.12.2009**
(21) Application number: 07013819.3
(22) Date of filing: 13.07.2007
(51) Int. Cl.: B60C 19/00, C08L 7/00, C08L 9/00, C08L 21/00

(54) **Rubber composition for sidewall and rubber composition for clinch apex and tire prepared using same**
Gummizusammensetzung für eine Seitenwand und Gummizusammensetzung für einen Clinch-Apex sowie daraus hergestellter Reifen
Composition en caoutchouc pour paroi latérale et composition en caoutchouc pour bourrage de coussin de jante et pneu préparé avec cette composition

(30) Priority: 23.08.2006 JP 2006226510
(43) Date of publication of application: 27.02.2008
(73) Proprietor: SUMITOMO RUBBER INDUSTRIES, LTD., Hyogo-ken (JP)
(72) Inventor: Mizuno, Yoichi, Kobe-shi Hyogo-ken (JP)
(74) Representative: Manitz, Finsterwald & Partner GbR

(56) References cited:
- EP-A- 1 160 287
- EP-A- 1 357 149
- EP-A- 1 621 365
- EP-A- 1 844 958
- JP-A- 10 147 668

## Description

The present invention relates to a tire prepared by using a rubber composition for a sidewall and a rubber composition for a clinch apex.

For reducing rolling resistance and enhancing wet grip performance, a technology of compounding silica in place of a carbon black in a rubber composition for a tread of a tire has been known. However, when silica is mixed in place of a carbon black, electric resistance of a tire becomes large so that there is a risk of causing a static electrical spark, resulting in catching of fire by fuel during re-fueling of a vehicle.

To avoid this, for example, technologies of coating a tread surface with rubber cement or reducing electric resistance between the road surface and the tire by interposing a rubber having small electric resistance in the tread are known.

On the other hand, demands for tires having small rolling resistance are growing year by year and not only treads but also sidewalls and clinch apexes are now required to contribute to reduction of rolling resistance.

For making sidewalls or clinch apexes contribute to reduction of rolling resistance, a method of compounding silica in place of a carbon black is known as in the case of treads. However, in this case too, it is impossible to reduce electric resistance of a tire as is the case of treads.

JP10-36559A discloses a rubber composition for a sidewall comprising specified amounts of a diene rubber, silica, a carbon black, and a silane coupling agent. However, there is still room for improvement with respect to an effect of reducing electric resistance.

Japanese Patent No.3685569 discloses a rubber composition for a tire tread comprising a compound having oxyethylene units in order to prevent accumulation of static electricity in a vehicle. However, improvements are still required in reducing electric resistance (enhancing electric conductivity) with respect to tire members other than a tire tread.

EP 1 844 958 A1, which is a prior art document under Article 54 (3) EPC, discloses a pneumatic tire comprising a conductive layer and a rubber cement layer, wherein the conductive layer and the rubber cement layer contain 100 parts by mass of a diene rubber and 1 to 30 parts by mass, per 100 parts by mass of the diene rubber, of a compound having an oxyethylene unit.

EP 1 357 149 A2 discloses a pneumatic tire having at least one component with a visually observable outer surface comprised of a carbon black rich composition, wherein the rubber composition contains at least one diene based elastomer, a reinforcing filler and 0.5 to 20 phr of at least one alkyphenoxypoly(alkyleneoxy)-alkanol.

An object of the present invention is to provide a tire comprising a rubber composition for a sidewall and a rubber composition for a clinch apex which can reduce rolling resistance and electric resistance, and improve crack resistance.

The present invention relates to a tire having a sidewall prepared by using a rubber composition for a sidewall and having a clinch apex prepared by using a rubber composition for a clinch apex, wherein said rubber compositions of the sidewall and of the clinch apex comprise 2 to 5 parts by weight of carbon black and 1.0 to 7.5 parts by weight of a compound having oxyethylene units based on 100 parts by weight of a diene rubber, wherein the compound has oxyethylene units at least in its side chain.

Preferably, the compound having oxyethylene units at least in its side chain has a structural unit represented by the following chemical formula: 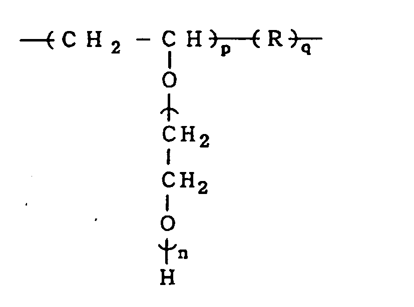 wherein n is an integer of 1 or more, p and q are integers satisfying the condition that the number of oxyethylene units is not less than 4 and not more than 12, and R is hydrogen atom or an alkylene group.

According to a further embodiment, the rubber composition for a clinch apex of the tire further comprises not more than 5 parts by weight a carbon black based on 100 parts by weight of the diene rubber.

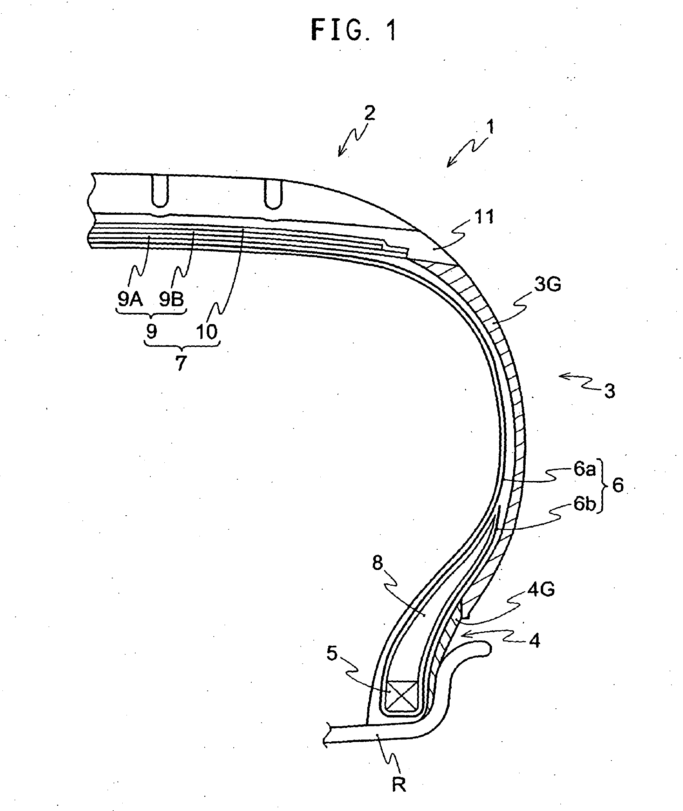

Fig. 1 is a sectional view of a tire of the present invention comprising a sidewall and/or a clinch apex.

The rubber composition for a sidewall and the rubber composition for a clinch apex of the tire of the present invention comprise a diene rubber, a compound having oxyethylene units and carbon black.

Fig. 1 shows a sectional view of the tire of the present invention comprising a sidewall and/ or a clinch apex.

The tire 1 has a tread 2 made of a tread rubber, a pair of sidewalls 3 extending from both ends of the tread 2 inwardly in a radial direction of a tire, and clinch apexes 4 formed at the inner ends of the respective sidewalls 3. In the figure, a tire for an automobile is shown. The tire 1 comprises bead cores 5 in each of clinch apexes 4, carcass 6 extending toroidally between the bead cores 5, and a tread reinforcing cord layer 7 which is arranged outside of the carcass 6 in a radial direction of a tire and inside of the tread 2. The carcass 6 comprises, for example, a sheet of carcass ply having a radial structure. The carcass ply has a main body part 6a extending toroidally between the bead cores 5 and a pair of turned-back parts 6b extending from the both ends of the main body part 6a and being replicated around the bead cores 5 in an axial direction of the tire from the inner side to the outer side. Between the main body part 6a and each of the turned-back parts 6b of the carcass ply, there is arranged a bead apex 8 extending outwardly in the radial direction from the bead core 5. At the same time, the tread reinforcing cord layer 7 comprises a belt 9 which is formed by layering two belt plies 9A and 9B, the belt plies 9A and 9B made of metallic cords being arranged in the circumferential direction of the tire, and a band 10 which is formed from a band ply comprising cords which are placed outside of the belt 9 in the radial direction of the tire and arranged in the circumferential direction of the tire. The band 10 can be omitted according to necessity. Each of the carcass ply of the carcass 6, the belt plies of the belt 9 and the band ply of the band 10 comprises a cord and a topping rubber covering the cord. Outside of the carcass 6, a sidewall rubber 3G forming an outer surface of the tire is arranged in the sidewall 3 area and a clinch apex rubber 4G is arranged in the clinch apex (bead area), respectively. At the same time, the outer end of the clinch apex rubber 4G in the radial direction of the tire contacts with the sidewall rubber 3G and the inner end of the clinch apex rubber 4G in the radial direction of the tire contacts with a metallic rim R. At the same time, in the tire 1, the tread 2 is arranged outside of the tread reinforcing cord layer 7 in the radial direction of the tire, with a base rubber 11 being interposed between the tread 2 and the tread reinforcing cord layer 7, and both ends of the base rubber 11 are connected with the sidewall rubber 3G.

Examples of the diene rubber are a natural rubber (NR), isoprene rubber (IR), butadiene rubber (BR), styrene-butadiene rubber (SBR), butyl rubber (IIR), halogenated butyl rubber (X-IIR), and ethylene-propylene-diene rubber (EPDM). These diene rubbers are not especially limited, and these may be used alone or two or more kinds thereof may be used in combination. Among these, NR and/or BR is preferable and a combination of NR and BR is more preferable for tires to be used under severe conditions because of their superior crack resistance and excellent tensile characteristics.

In the rubber composition for a sidewall and the rubber composition for a clinch apex of the tire of the present invention, electric resistance can be decreased and accumulation of static electricity in a vehicle can be prevented because hydrophilicity is enhanced and electric conductivity is increased by containing a compound having oxyethylene units.

The compound having oxyethylene units used in the present invention has a structure represented by the following general formula:

-O-(CH₂-CH₂-O)ₙ-H

wherein n represents an integer of 1 or more.

In the above formula, n is preferably 1 or more, more preferably 2 or more, further preferably 3 or more. When n is 0, no oxyethylene unit is present and thus there is a tendency that a sufficient effect of reducing electric resistance cannot be obtained. At the same time, n is preferably not more than 16, more preferably not more than 14. In the case where n is more than 17, compatibility with the rubber component and a reinforcing effect tend to deteriorate.

The oxyethylene units constituting the compound having oxyethylene units may be bonded to a trunk chain, the ends, or the side chains, wherein the compound has oxyethylene units at least in its side chain because the tire to be obtained has excellent surface properties, for example, duration of an effect of preventing accumulation of static electricity and reduction in electric resistance, when the oxyethylene units are graft-polymerized with polyethylene as in the case of compounds which are generally used as a permanent antistatic agent.

In the compound having oxyethylene units at least in its side chain, the number of oxyethylene units is preferably not less than 4, more preferably not less than 8 per 100 carbon atoms constituting the trunk chain. In the case where the number of oxyethylene units is not more than 3, electric resistance tends to increase. At the same time, the number of oxyethylene units is preferably not more than 12, more preferably not more than 10. In the case where the number of oxyethylene units is not less than 13, there is a tendency that compatibility with the rubber component and a reinforcing effect are deteriorated.

In the compound having oxyethylene units at least in its side chain, it is preferable to use, as the trunk chain, a compound mainly having polyethylene, polypropylene, or polystyrene.

Examples of the compound having oxyethylene units at least in its side chain which can be used in the present invention are compounds having a structural unit represented by the following chemical formula; 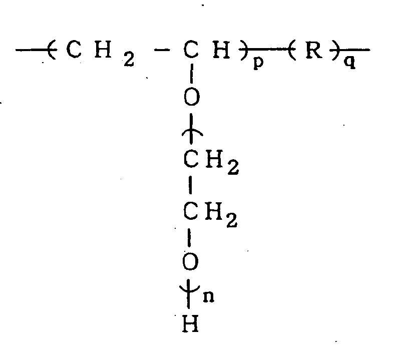 wherein n is an integer of 1 or more, p and q are integers satisfying the above-mentioned conditions with respect to the number of oxyethylene units, and R is hydrogen atom or an alkylene group.

The compound having oxyethylene units at least in its side chain may have oxyethylene units also in the trunk chain and the ends thereof.

The amount of the compound having oxyethylene units is not less than 1.0 part by weight, preferably not less than 2.0 parts by weight based on 100 parts by weight of the diene rubber. In the case where the amount of the compound having oxyethylene units is less than 1.0 part by weight, an effect of reducing electric resistance is insufficient. At the same time, the amount of the compound having oxyethylene units is not more than 7.5 parts by weight, preferably not more than 5.0 parts by weight. In the case where the amount of the compound having oxyethylene units is more than 7.5 parts by weight, a reinforcing effect deteriorates and an effect of reducing electric resistance is also small.

The rubber composition for a sidewall and the rubber composition for a clinch apex of the tire of the present invention further comprises a carbon black.

The carbon black is not particularly limited and those which have been used in the tire industry such as SAF, ISAF, HAF, and FEF may be used.

The amount of carbon black is not less than 2 parts by weight, and preferably not less than 3 parts by weight based on 100 parts by weight of the diene rubber. In the case where the amount of carbon black is less than 2 parts by weight, blackness degree of the rubber composition becomes insufficient and a reinforcing effect tends to deteriorate. At the same time, the amount of carbon black is not more than 5 parts by weight, and preferably not more than 4 parts by weight. In the case where the amount of carbon black is more than 5 parts by weight, the content of non-petroleum resources becomes insufficient, resulting in loss of consideration to environment and also an effect of reducing tan δ tends to be insufficient.

The rubber composition for a sidewall and the rubber composition for a clinch apex of the tire of the present invention may contain a reinforcing agent other than the carbon black.

Examples of the reinforcing agent other than the carbon black are, for instance, silica, alumina, clay, calcium carbonate, aluminum hydroxide, magnesium oxide, magnesium hydroxide, and talc. These may be used without particular limitation and may be used alone or two or more kinds thereof may be used in combination. Particularly silica is preferable because of its superior reinforcing effect.

As for the silica, one prepared by a dry process and one prepared by a wet process can be exemplified, and any kinds of silica that have been used in the tire industry can be used without particular limitation.

When silica is contained, the amount of silica is preferably not less than 30 parts by weight, more preferably not less than 35 parts by weight based on 100 parts by weight of the diene rubber. In the case where the amount of silica is less than 30 parts by weight, a reinforcing effect tends to become insufficient. At the same time, the amount of silica is preferably not more than 85 parts by weight, more preferably not more than 80 parts by weight. In the case where the amount of silica is more than 85 parts by weight, there is a tendency that heat is built up and processability decreases. The amount of silica in the rubber composition for a sidewall is preferably 30 to 50 parts by weight and the amount of silica in the rubber composition for a clinch apex is preferably 65 to 85 parts by weight.

In the rubber composition for a sidewall and the rubber composition for a clinch apex of the present invention, when silica is contained, it is preferable to use a silane coupling agent together.

The silane coupling agent is not particularly limited and there can be suitably used, for example, sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyltetrasulfide, 3-triethoxysilylpropylbenzothiazoltetrasulfide, 3-triethoxysilylpropylmethacrylatemonosulfide, and 3-trimethoxysilylpropylmethacrylatemonosulfide, mercapto silane coupling agents such as 3-mercaptopropyltrimethoxysilane, 3-mercaptopropyltriethoxysilane, 2-mercaptoethyltrimethoxysilane, and 2-mercaptoethyltriethoxysilane, vinyl silane coupling agents such as vinyltriethoxysilane and vinyltrimethoxysilane, amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane, glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane, nitro silane coupling agents such as 3-nitropropyltrimethoxysilane and 3-nitropropyltriethoxysilane, and chloro silane coupling agents such as 3-chloropropyltrimethoxysilane, 3-chloropropyltriethoxysilane, 2-chloroethyltrimethoxysilane, and 2-chloroethyltriethoxysilane.

When the silane coupling agent is contained, the amount of silane coupling agent is preferably 5 to 10 parts by weight based on 100 parts by weight of silica. In the case where the amount of silane coupling agent is less than 5 parts by weight, dispersion of silica tends to be inadequate. On the contrary, in the case where the amount of silane coupling agent is more than 10 parts by weight, the effect of dispersing silica is saturated and cost tends to be increased.

In addition to the diene rubber, the compound having oxyethylene units, the carbon black, the reinforcing agent, and the silane coupling agent, the rubber composition for a sidewall and the rubber composition for a clinch apex of the present invention may comprise compounding agents generally used in the tire industry such as process oil, wax, antioxidant, stearic acid, zinc oxide, a vulcanizing agent such as sulfur, and a vulcanization accelerator as case demands to such an extent not to impair the desired effect of the present invention.

As shown in Fig. 1 which is a partial sectional view of the tire having the sidewall 3 and/or the clinch apex 4, the sidewall 3 is a rubber portion arranged as a tire surface that extends inwardly in the radial direction of the tire from each end of the tread 2 and functions to enhance ride quality by bending during running. Further, the clinch apexes 4 are rubber portions arranged at each inner end of the sidewalls 3 and function to fix the tire to the tire wheel.

The rubber composition of the present invention is used for a sidewall and for a clinch apex because of superior reinforcing effect and high electric conductivity thereof.

The tire of the present invention is prepared in a known manner using the rubber composition for a sidewall and the rubber composition for a clinch apex of the present invention. More specifically, the rubber composition of the present invention in which the aforementioned compounding agents are compounded according to necessity is extruded and processed into a shape of a sidewall and a clinch apex in an unvulcanized state and then is laminated with other tire members on a tire molding machine in a known manner to obtain an unvulcanized tire. Finally, the unvulcanized tire is heated and pressed to produce the tire of the present invention.

### EXAMPLES

Hereinafter, the present invention will be explained in detail based on Examples, but it should be understood that the present invention is not limited thereto.

Various chemicals used in Examples and Comparative Examples will be collectively explained hereinafter.

Natural rubber (NR): RSS#3

Butadiene rubber (BR): BR150B available from Ube Industries, Ltd.

Carbon black: DIABLACK H (N330) available from Mitsubishi Chemical Corporation

Silica: Ultrasil VN3 available from Degussa GmbH

Silane coupling agent: Si266 (bis(3-triethoxysilylpropyl)disulfide) available from Degussa GmbH

Compound having oxyethylene units: Sumiguard 300G available from Sumitomo Chemical Co., Ltd. and represented by the following chemical formula:

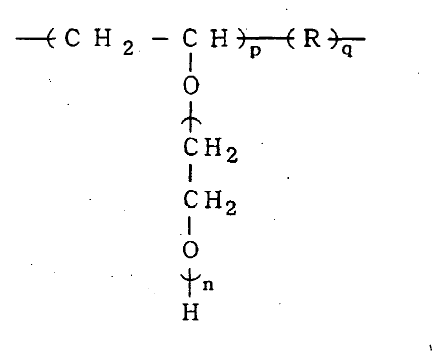

Process oil: DIANA PROCESS AH40 available from Idemitsu Kosan Co., Ltd.

Wax: SANNOC wax available from Ouchi Shinko Chemical Industrial Co., Ltd.

Antioxidant: OZONONE 6C (N-(1,3-dimethylbutyl)-N'-phenyl-p-phenylenediamine) available from Seiko Chemical Co., Ltd.

Stearic acid: Kiri available from NOF Corporation

Zinc oxide: Ginrei R available from Toho Zinc Co., Ltd.

Sulfur: Sulfur available from Tsurumi Chemical Industry Co., Ltd.

Vulcanization accelerator: NOCCELER NS (N-tert-butyl-2-benzothiazolylsulfenamide) available from Ouchi Shinko Chemical Industrial Co., Ltd.

### (Preparation of vulcanized rubber compositions for sidewalls of Examples 1 to 5 and Comparative Examples 1 to 3)

In accordance with the compounding prescriptions shown in Table 1, the chemicals other than sulfur and the vulcanization accelerator were kneaded in a Banbury mixer under the condition of 150°C for 5 minutes to prepare respective kneaded products. Then, sulfur and the vulcanization accelerator were added to the obtained kneaded products and were kneaded on a biaxial open roll under the condition of 80°C for 5 minutes to prepare unvulcanized rubber compositions. The obtained unvulcanized rubber compositions were press-vulcanized under the condition of 170°C for 15 minutes to prepare vulcanized rubber compositions for a sidewall to be used for Examples 1 to 5 and Comparative Examples 1 to 3.

### (Preparation of vulcanized rubber compositions for clinch apexes of Examples 6 to 10 and Comparative Examples 4 to 6)

Vulcanized rubber compositions for clinch apexes to be used for Examples 6 to 10 and Comparative Examples 4 to 6 were prepared in the same manner as in Examples 1 to 5 and Comparative Examples 1 to 3 except that the compounding prescriptions shown in Table 2 were used.

### (Manufacture of test tires using sidewalls of Examples 1 to 5 and Comparative Examples 1 to 3)

The unvulcanized rubber compositions of Examples 1 to 5 and Comparative Examples 1 to 3 were formed into a shape of a sidewall and were laminated with other tire members to obtain unvulcanized tires, and then the unvulcanized tires were press-vulcanized under the condition of 170°C for 15 minutes to obtain test tires for a passenger car (tire size: 195/65R15) of Examples 1 to 5 and Comparative Examples 1 to 3.

### (Manufacture of test tires using clinch apexes of Examples 6 to 10 and Comparative Examples 4 to 6)

Test tires for a passenger car of Examples 6 to 10 and Comparative Examples 4 to 6 were prepared in the same manner as in Examples 1 to 5 and Comparative Examples 1 to 3 except that the unvulcanized rubber compositions were formed into a shape of a clinch apex.

### (Viscoelasticity test)

Test pieces having a predetermined size are prepared from the obtained vulcanized rubber compositions, and a loss tangent (tan δ) at 60°C thereof is measured under the conditions of a frequency of 10 Hz, an initial strain of 10.0 %, and a dynamic strain of 2.0 % using a viscoelasticity spectrometer manufactured by Iwamoto Seisakusho Kabushiki Kaisha. The smaller the value of tan δ is, the more excellent the low heat build-up property is, and thus the rolling resistance can be reduced more. Therefore a smaller tan δ is preferable.

### (Tensile test)

No. 3 Dumbbell type test pieces are prepared by cutting out from the sidewall portion of the manufactured test tire in the cases of Examples 1 to 5 and Comparative Examples 1 to 3 and from the clinch apex portion of the manufactured test tire in the cases of Examples 6 to 10 and Comparative Examples 4 to 6, and using the test pieces, tensile tests are conducted for measurements of elongation at break (EB; %) according to JIS K 6251 "Rubber, vulcanized or thermoplastic--Determination of tensile stress-strain properties". The larger the EB (%) is, the more superior the crack resistance is.

### (Electric resistance)

### ((1) Volume specific resistivity)

Test pieces with a length of 15 cm, a width of 15 cm, and a thickness of 2 mm are prepared from the obtained vulcanized rubber compositions, and using an electric resistance tester R8340A manufactured by Advantest Corporation, a volume specific resistivity (log[Ωcm]) at 25°C is measured under the conditions of an applied voltage of 500 V and a humidity of 50 %. The smaller the value (log[Ωcm]) of volume specific resistivity is, the more the electric resistance of the rubber composition can be reduced, and thus a smaller volume specific resistivity is preferable.

### ((2) Electric resistance of tires)

A rim made of steel is fit to each of the prepared tires. Next, the air pressure is adjusted to 2.0 kg/cm² and a load of 450 kg is applied, and then the resistance value (log[Ω]) (referred to as electric resistance of tire in Tables 1 and 2) between a center of the rim and a steel conductive plate in contact with the tire is measured under the conditions of an applied voltage of 500 V, a temperature of 25°C, and a humidity of 50 %.

Results of the aforementioned evaluations are shown in Tables 1 and 2.

**TABLE 1**

| | Ex. | | | | | Com. Ex. | | |
|---|---|---|---|---|---|---|---|---|
| | 1 | 2 | 3 | 4 | 5* | 1 | 2 | 3 |
| Amounts (part by weight) | | | | | | | | |
| NR | 60 | 60 | 60 | 60 | 60 | 60 | 60 | 60 |
| BR | 40 | 40 | 40 | 40 | 40 | 40 | 40 | 40 |
| Carbon black | 5 | 5 | 5 | 5 | - | 50 | 5 | 5 |
| Silica | 40 | 40 | 40 | 40 | 40 | - | 40 | 40 |
| Silane coupling agent | 4 | 4 | 4 | 4 | 4 | - | 4 | 4 |
| Compound having oxyethylene units | 1 | 2 | 5 | 7.5 | 5 | - | - | 10 |
| Wax | 1 | 1 | 1 | 1 | 1 | 1 | 1 | 1 |
| Antioxidant | 3 | 3 | 3 | 3 | 3 | 3 | 3 | 3 |
| Stearic acid | 1 | 1 | 1 | 1 | 1 | 1 | 1 | 1 |
| Zinc oxide | 3 | 3 | 3 | 3 | 3 | 3 | 3 | 3 |
| Sulfur | 2 | 2 | 2 | 2 | 2 | 2 | 2 | 2 |
| Vulcanization accelerator | 1 | 1 | 1 | 1 | 1 | 1 | 1 | 1 |
| Evaluation Results | | | | | | | | |
| tan δ | 0.11 | 0.113 | 0.117 | 0.115 | 0.116 | 0.14 | 0.11 | 0.116 |
| EB (%) | 590 | 590 | 580 | 580 | 540 | 550 | 600 | 545 |
| Electric resistance | | | | | | | | |
| (1) Volume specific resistivity (log[Ωcm]) | 10.8 | 10.0 | 9.7 | 8.4 | 10.3 | 8.0 | 12.5 | 8.3 |
| (2) Electric resistance of tire (log[Ω]) | 8.0 | 7.7 | 7.2 | 7.0 | 7.1 | 7.5 | 12.0 | 7.0 |

| | | | | | | | | |
|---|---|---|---|---|---|---|---|---|
| * not according to the invention | | | | | | | | |

**TABLE 2**

| | Ex. | | | | | Com. Ex. | | |
|---|---|---|---|---|---|---|---|---|
| | 6 | 7 | 8 | 9 | 10* | 4 | 5 | 6 |
| Amounts (part by weight) | | | | | | | | |
| NR | 40 | 40 | 40 | 40 | 40 | 40 | 40 | 40 |
| BR | 60 | 60 | 60 | 60 | 60 | 60 | 60 | 60 |
| Carbon black | 5 | 5 | 5 | 5 | - | 65 | 5 | 5 |
| Silica | 75 | 75 | 75 | 75 | 75 | - | 75 | 75 |
| Silane coupling agent | 6 | 6 | 6 | 6 | 6 | - | 6 | 6 |
| Compound having oxyethylene units | 1 | 2 | 5 | 7.5 | 7.5 | - | - | 10 |
| Process oil | 10 | 10 | 10 | 10 | 10 | 10 | 10 | 10 |
| Wax | 1 | 1 | 1 | 1 | 1 | 1 | 1 | 1 |
| Antioxidant | 3 | 3 | 3 | 3 | 3 | 3 | 3 | 3 |
| Stearic acid | 1 | 1 | 1 | 1 | 1 | 1 | 1 | 1 |
| Zinc oxide | 3 | 3 | 3 | 3 | 3 | 3 | 3 | 3 |
| Sulfur | 1 | 1 | 1 | 1 | 1 | 1 | 1 | 1 |
| Vulcanization accelerator | 3 | 3 | 3 | 3 | 3 | 3 | 3 | 3 |
| Evaluation Results | | | | | | | | |
| tan δ | 0.143 | 0.139 | 0.144 | 0.145 | 0.146 | 0.18 | 0.14 | 0.146 |
| EB (%) | 425 | 415 | 405 | 360 | 340 | 350 | 420 | 345 |
| Electric resistance | | | | | | | | |
| (1) Volume specific resistivity (log(Ωcm]) | 10.9 | 10.2 | 9.7 | 8.4 | 8.5 | 7.0 | 12.5 | 8.3 |
| (2) Electric resistance of tire (log[Ω]) | 8.0 | 7.9 | 7.5 | 7.0 | 7.1 | 7.5 | 9.4 | 7.0 |

| | | | | | | | | |
|---|---|---|---|---|---|---|---|---|
| * not according to the invention | | | | | | | | |

Comparative Examples 1 and 4 represent conventional rubber compositions for a sidewall and a clinch apex, respectively comprising a filler containing a carbon black as major component but no compound having oxyethylene units.

When silica is used as major component of the fillers and no compound having oxyethylene units is contained in the rubber compositions for a sidewall and for a clinch apex, rolling resistance can be reduced and crack resistance can be enhanced but electric resistance is increased as shown in Comparative Examples 2 and 5.

In Comparative Examples 3 and 6, crack resistance is deteriorated since the amount of the compound having oxyethylene units is large.

In the rubber compositions of Examples 1 to 10 comprising a specified amount of the compound having oxyethylene units, both of rolling resistance and electric resistance can be decreased and crack resistance can be enhanced. In particular, in the cases of the rubber compositions of Examples 1 to 4 and 6 to 9 comprising a carbon black, crack resistance can be further enhanced.

The present invention can provide a tire using a rubber composition for a sidewall and a rubber composition for a clinch apex being capable of reducing rolling resistance and electric resistance and enhancing crack resistance by mixing specified amounts of a diene rubber and a compound having oxyethylene units.

## Claims

1. A tire having a sidewall prepared by using a rubber composition for a sidewall and having a clinch apex prepared by using a rubber composition for a clinch apex, wherein said rubber compositions of the sidewall and of the clinch apex comprise 2 to 5 party by weight of carbon black and 1.0 to 7.5 parts by weight of a compound having oxyethylene units based on 100 parts by weight of a diene rubber, wherein said compound has oxyethylene units at least in its side chain.

2. A tire according to Claim 1, wherein the compound having oxyethylene units at least in its side chain has a structural unit represented by the following chemical formula: 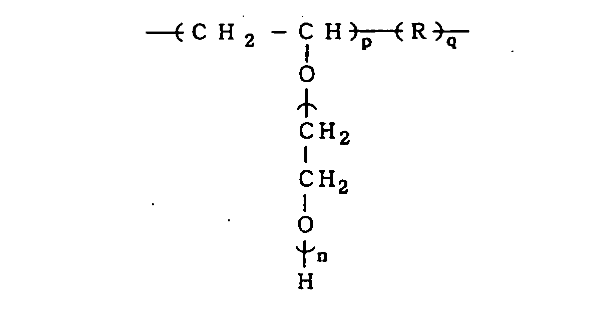 wherein n is an integer of 1 or more, p and q are integers satisfying the condition that the number of oxyethylene units is not less than 4 and not more than 12, and R is hydrogen atom or an alkylene group.

## Patentansprüche

1. Reifen mit einer Seitenwand, welche unter Verwendung einer Kautschukzusammensetzung für eine Seitenwand hergestellt worden ist, und mit einem Wulstabriebsstreifen (clinch apex), welcher unter Verwendung einer Kautschukzusammensetzung für einen Wulstabriebsstreifen hergestellt worden ist, wobei die Kautschukzusammensetzungen der Seitenwand und des Wulstabriebsstreifens, bezogen auf 100 Gewichtsteile eines Dienkautschuks, 2 bis 5 Gewichtsteile Ruß und 1,0 bis 7,5 Gewichtsteile einer Verbindung mit Oxyethyleneinheiten enthalten, wobei die Verbindung wenigstens in ihrer Seitenkette Oxyethyleneinheiten aufweist.

2. Reifen nach Anspruch 1, wobei die Verbindung, welche wenigstens in ihrer Seitenkette Oxyethyleneinheiten aufweist, eine strukturelle Einheit enthält, welche durch die nachfolgende chemische Formel wiedergegeben wird: 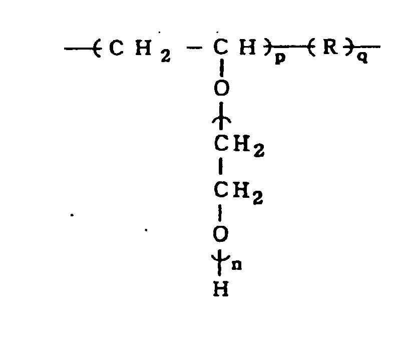 worin n eine ganze Zahl von 1 oder mehr ist, worin p und q ganze Zahlen sind, welche der Bedingung genügen, dass die Anzahl der Oxyethyleneinheiten nicht weniger als 4 und nicht mehr als 12 beträgt, und worin R ein Wasserstoffatom oder eine Alkylengruppe ist.

## Revendications

1. Pneumatique ayant un flanc préparé en utilisant une composition de caoutchouc pour flanc et ayant un sommet de talon préparé en utilisant une composition de caoutchouc pour sommet de talon où lesdites compositions de caoutchouc du flanc et du sommet de talon comprennent 2 à 5 parties en poids de noir de carbone et 1,0 à 7,5 parties en poids d'un composé ayant des unités d'oxyéthylène pour 100 parties en poids d'un caoutchouc diénique, où ledit composé a des unités d'oxyéthylène au moins dans sa chaîne latérale.

2. Pneumatique selon la revendication 1 où le composé ayant des unités d'oxyéthylène au moins dans sa chaîne latérale a une unité structurale représentée par la formule chimique suivante : 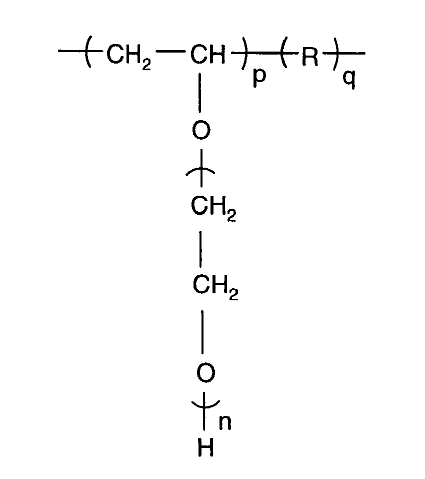 où n est un entier de 1 ou plus, p et q sont des entiers satisfaisant la condition que le nombre d'unités d'oxyéthylène n'est pas inférieur à 4 et pas supérieur à 12, et R est un atome d'hydrogène ou un groupe alkylène.
